# EUROPEAN PATENT APPLICATION

(11) **EP 4 052 819 A1**
(43) Date of publication of application: **07.09.2022**
(21) Application number: 21159941.0
(22) Date of filing: 01.03.2021
(51) Int. Cl.: B22F 10/28, B22F 10/32, B22F 12/20, B23K 26/342, B23K 26/70, B29C 64/153, B29C 64/264, B29C 64/268, B33Y 30/00, B33Y 40/00

(54) **APPARATUS WITH COOLING ELEMENT FOR VAPOR CONDENSING IN ADDITIVE MANUFACTURING**

(71) Applicant: Siemens Energy Global GmbH & Co. KG, 81739 München (DE)
(72) Inventor: Rule, David, 20537 Hamburg (DE)

(57) **Abstract**

An apparatus (10) for a beam-assisted additive manufacturing device (1) is presented. The apparatus comprises a cooling element (11) with a functional surface (12), wherein the cooling element (11) is surrounding or to be placed around a beam window (2) for admitting a beam (3) to a build space (4) of the device (1) during a manufacturing process, wherein the apparatus (10) is configured such that the functional surface (12) is or can further be set to a temperature (T) at which vapor (V) emerging from the manufacturing process spontaneously condensates on the functional surface (12) of the cooling element (11). Moreover, a related additive manufacturing device (1) and a use of the apparatus (10) are presented.

## Description

The present invention relates to an apparatus for a beam-assisted additive manufacturing device, such as a device for selective laser melting or electron beam melting. The apparatus comprises a cooling element with a functional surface. Moreover, a related additive manufacturing device and a related use of the mentioned apparatus are described.

Additive manufacturing (AM) or 3D-printing techniques comprise e.g. powder-bed-fusion methods, such as selective laser melting (SLM) or laser powder bed fusion (LPBF), selective laser sintering (SLS) and electron beam melting (EBM) .

Additive manufacturing, particularly powder-bed methods employing an energy beam for the selective solidification of a powder in order to establish a component have proven to be useful and advantageous in the fabrication of prototypes or complex components, such as components with filigree structure or functionally cooled components. Further, the additive manufacture stands out for its short chain of process steps which in turn enables material economization and a particularly low lead time.

Related apparatuses or setups for such methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as Computer-Aided-Manufacturing (CAM) instructions, which may be present in the form of a dataset.

In these approaches, it occurs as a drawback that fine particulates or smoke residue emerging from a manufacturing process in a build chamber of a given device deposit or settle on a beam entry window in the build chamber of the device. Of course, such settlement or related obfuscation of the glass of the window disrupt the laser imaging, distorts beam shape and, hence, causes deviations and inaccuracies in the resulting manufacturing process.

Conventionally, the mentioned problem is addressed in different ways. Several manufacturing devices or machines are equipped with a laser entry glass which can be cleaned, such as during or in the middle of a manufacturing job. This, however, usually involves the undesirable effect that the process needs to be stopped or paused for the cleaning. Alternatively, changes in the laser imaging or transmission of the window and the resulting process quality are simply accepted or tolerated as an unavoidable artefact in the process. Hence the entry glass is only cleaned as often as possible between subsequent build jobs of the device.

An apparatus for a powder bed based additive manufacturing device is e.g. described in WO 2019/001900 A1.

It is an object of the present invention to provide means by which the above-mentioned drawbacks and problems can be prevented or solved. Particularly, a cooling element is provided that may operate as a trap for smoke particulates, residues or vapors during the manufacturing process.

The mentioned object is achieved by the subject-matters of the independent claims. Advantageous embodiments are subject-matter of the dependent claims.

An aspect of the present invention relates to an apparatus for a beam-assisted, such as a powder bed fusion or electron beam melting, additive manufacturing device, wherein the apparatus comprises a cooling element with a functional surface. In an operation of the device, the cooling element preferably at least partiality surrounds a beam window of the device for admitting an energy or welding beam, such as a laser beam, to the build space of the device during the manufacturing operation. Anyway, said cooling element shall be configured such that it may be placed around the mentioned beam window. The apparatus is further configured such that the functional surface can be set, cooled or attain a temperature during the manufacturing process at which vapor and/or condensable fumes or smoke emerging from the manufacturing process spontaneously condensate or sublimate on the functional surface.

Said spontaneous condensation of the vapor preferably means that said vapor shall condensate at the functional surface of the cooling element prior to any contact or settlement on the beam window, such as at an inside of the beam window in the build space. In other words, said cooling element may, owed to its functional surface, act as a vapor or fume trap for depleting vapor of fumes carried by the vapor in the vicinity of the beam window. Preferably, such trapping or depletion of the mentioned agents via the condensation of the vapor already works once the temperature of the functional surfaces is cooled or set to a temperature below a usual operating temperature of the beam window during the process.

In this way, performance and productivity of additive manufacturing devices equipped with the described apparatus may significantly be increased. Simultaneously, the laser imaging is improved and with it the fidelity of the manufacturing process, such as in terms of spatial resolution and dimensional accuracy.

In an embodiment, the cooling element has a ring-like shape. According to this embodiment, the cooling element and with it the functional surface may easily be embodied in a way that it may surround the beam window.

In an embodiment, the functional surfaces is formed by conductive material, such as a metal. In this way, the cooling of the functional surface or lowering of its temperature during the operation may be facilitated due to the material's thermally conducting properties.

In an embodiment the functional surfaces formed of aluminum, copper or silver or any other noble or highly conducting metal, such as palladium or gold, or the like.

In an embodiment the functional surface comprises or is formed by corrugations of fins in order to increase surface area of the functional surface, such as for effecting an increased capacity for absorbing, condensing or depleting the vapors in the vicinity of the laser window.

In an embodiment the functional surface or as the case maybe the cooling element is or can be coupled to a water cooling system, such as a cooling system or chiller of the additive manufacturing device.

In an embodiment, the functional surface is or can be coupled to a cooling system of a beam source of beam optics of the additive manufacturing device.

According to these embodiments, including the coupling of the apparatus with a cooling system, synergies with regards to the cooling medium, process complexities and efficiencies can advantageously be exploited.

In an embodiment, the temperature at which the functional surfaces - suitable to condensate said vapor - is (significantly) below an operating temperature of the beam window during the manufacturing process. Preferably, the temperature roughly amounts to below zero °C, such as below -15°C or below -50°C. This temperature is e.g. expected to effectuate a reliable sublimation of water vapor in a partially evacuated atmosphere as is the case in the present context.

In an embodiment the vapor is a metal and/or water vapor or any other vapor, such as carried by a shielding gas stream during the manufacturing process.

A further aspect of the present invention relates to an additive manufacturing device or machine comprising the apparatus as described, wherein the cooling element and/or functional surface is located at the top of the build space of the device and/or located such that it surrounds the mentioned beam window.

In an embodiment, the device is a selective laser melting device and the beam window is a laser entry window for the laser.

In an embodiment, the device is a selective laser sintering device and the beam window is a laser entry window for the laser.

In an embodiment, the devices then electron beam melting device and the beam window is an entry window for the electron beam.

A further aspect of the present invention relates to the use of the apparatus as described for condensing and/or absorbing said vapor during the manufacturing process in order to avoid settlement of small, soot or any residuals or particulates, including redeposit or weld spatter, on the beam window.

Advantages and embodiments relating to the described apparatus may as well pertain or be valid with regard to the device and/or the component to be manufactured in the device.

Further, features and advantageous embodiments become apparent from the following description of the exemplary embodiment in connection with the Figures.
Figure 1 indicates in a schematic effects of an energy beam directed to a powder surface in a beam-assisted additive manufacturing process.
Figure 2 indicates simulated trajectories of particulates emerging from a melt pool and swirling around in the build space.
Figure 3 indicates in a schematic sectional view at least parts of an additive manufacturing device comprising an apparatus according to the present invention.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

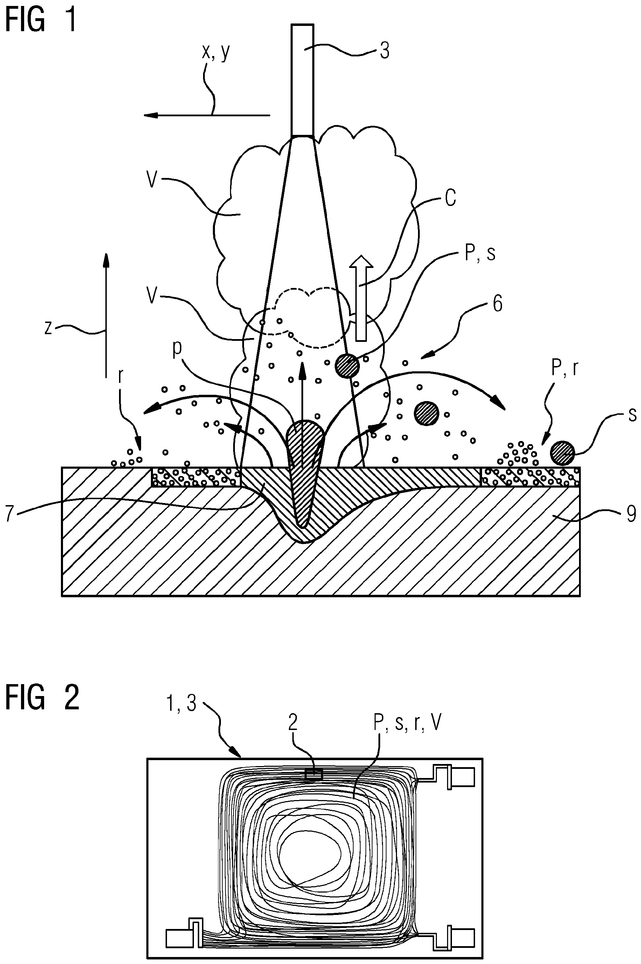

Figure 1 indicates in a sectional scheme effects which occur when a powdery base material layer is exposed with an energy beam 3 as is the case in beam-assisted additive manufacturing or powder bed fusion processes, like selective laser melting. Said methods usually employ a powder bed 6 arranged on a build platform (not explicitly indicated) onto which a component 9 is to be established layerwise along a build direction z in that a recoater (not explicitly indicated) subsequently distributes layers of powder. These powder layers are then selectively irradiated by the energy beam 3.

It is indicated in Figure 1 that the beam 3 is scanned from right to left, e.g. in x or y direction, over the surface of the component 9 which has already been partly established in the scheme. The irradiation with the beam 2 effectuates a melt pool 7 and subsequently selective solidification of powder material into the component's structure. Within or close to the melt pool 7, a plasma plume p may establish. Due to the strong local energy input (beam diameter may be in the range of 100 µm to 200 µm), particulates P, soot, smoke, any other residues or weld spatter s, redeposit r of material onto the powder bed 6 or the manufacturing plane (not explicitly indicated) may occur. Moreover, as indicated by the plumes or clouds V in the sketch of Figure 1, vapors V, such as metal vapor, moisture or water vapor may evolve in the process, such as due to an evaporation of related residuals.

Preferably, the component 9 denotes a component of a turbo machine, e. g. applied in the flow path hardware of a gas turbine, like a sealing or liner component. The component is, thus, preferably made of a nickel-or cobalt-based superalloy, particularly a precipitation hardened alloy.

The component 9 may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

In the alternative, the component 9 may pertain to a high-performance component, such as a component applied in power generation, in the aviation or the automotive industry.

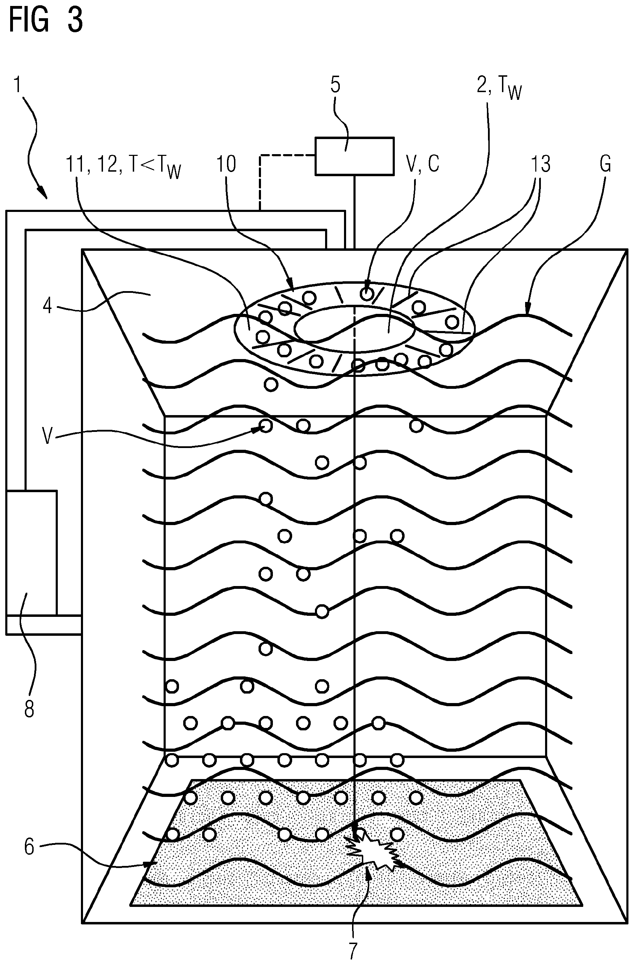

Figure 2 indicates simulated trajectories of particulates P that emerge from a melt pool 7 during the process as described. Due to a shield of purge gas G (cf. as well Figure 3 below), said smoke, vapor or particulates P may be swirling up or carried away from the bottom of the build space (cf. numeral 4 in Figure 3). This is particularly indicated by the fine trajectories of particles as obtained from a computational fluid dynamics simulation. It is inter alia shown that said particulates may as well reach a beam entry window 2 which may be located at the top of any additive manufacturing device 1 (cf. Figure 3 below). Consequently, said particles, e.g. any particulates P, vapor V, soot, spatter, smoke etc. that is carried by the shield gas G may readily settle or adhere at the described beam window 2. This leads in turn to obfuscation of the window 2 and to process disturbance and significant procedural drawbacks for the manufacture of the component 9.

Figure 3 shows a schematic of an additive manufacturing device 1 as the one introduced above. The device 1 further comprises a build space 4 and, at its top, a laser beam (entry) window 2 which admits an energy beam to enter the build space 4 in order to perform the selective irradiation in the manufacture of the component (not explicitly indicated here). This is indicated by the arrow entering the build space 4 from above (cf. dashed line) and impinging at the powder bed 6 (cf. bottom of the build space 4). Preferably, said beam stems from a beam source 5 which may as well be part of the device 1. Said beam or beam source may expediently be a laser or an electron beam.

The undulating horizontal lines in the chamber or build space 4 shall indicate a shield or purge gas G which may be applied during any additive manufacturing process in order to avoid oxidation or any other reactions during the process which may affect the quality of the component 9 to be manufactured. Usually, said gas G is an inert gas, like nitrogen or argon. The shielding gas G is not directly heated, but is usually recirculated through the system, where the laser-based melting of metal happens, and a base plate is heated accordingly. Usual temperatures of the base plate amount in this context to about 80°C or more. Modern devices may even allow a heating of up to few hundreds of °C. Only in this way the shielding gas G is usually heating during the process.

Said device 1 comprises an apparatus 10 which is subject to the present invention. Said apparatus 10 comprises a cooling element 11 that is located at the top of a build space 4 and/or such that it surrounds the beam window 2. The cooling element may particularly have a ring-like shape, and in this way be disposed to fully surround the beam window 2 in its vicinity.

The apparatus 10 and/or the cooling element 11 is/are configured such that the functional surface 12 can be set or cooled to a temperature T at which vapor V - emerging from the manufacturing process - spontaneously condensates on the functional surface 12. Preferably, the mentioned temperature T which the functional surface 12 shall attain during the process, is significantly below an operating temperature T_{w} of the beam window 2 during the manufacturing process. This effectuates that the condensing of the vapor V - which may in turn carry the mentioned adverse agents, like soot or smoke s, particulates P or related residuals - depletes said agents on the beam window 2 or avoids a related settlement and obfuscation. In other words, the apparatus 10 with the cooling element 11 may - in a cooled state - function as a "trap" for said agents by stimulated condensing.

For the sublimation of water and other vapor, a temperature T of below zero °C is recommended, such as below -15°C or below -30°C such as below -50°C, or temperatures therebetween.

The described vapor V may be any vapor carried by the shield gas G stream. Therewith, the mentioned soot or filthy "condensate" that would otherwise be apparent from the inside of the laser entry window in conventional LPBF machines and (on all the other surfaces of the build chamber) can reliably be kept away from the window surface 2.

Preferably, the functional surfaces 12 is formed by a conductive material, such as a metal, like aluminum, copper, silver or any other (electrically and/or thermally) highly conductive material. As indicated by the somewhat radial lines around cooling element 11, the functional surface 12 comprises corrugations or fins 13 in order to increase surface area and therewith the capacity of the functional surface 12 to adhere and capture the vapor V by condensing it on the functional surface 12. In other words, the presented apparatus 10 solves the mentioned problem of obfuscation and contamination of the beam window 2 by utilizing a cooled (metal) or coolable surface around the laser entry glass as a "cold trap". The cold surface around the glass will condense the vapor or fumes on the metal surface before it gets to the window glass. This would reduce the exposure of the entry glass to fume condensate and increases the cleanliness of the glass through longer process durations.

As indicated by the cooling circuitry (cf. reference numeral 8), it is contemplated that the functional surface 12 is or can be coupled to a water cooling system 8, such as a cooling system or chiller of the additive manufacturing device. In this way, the apparatus 10 may be embodied easiest and temperature of the functional surface 12 may expediently be reduced, such as to below a usual operating temperature of the window 2.

As indicated by the dashed line at the top, it is described that the cooling element 11 or the functional surface 12 is or can be coupled to a cooling system 8 of a beam source 5 of the device 1 or related optics of the additive manufacturing device 1.

## Claims

1. Apparatus (10) for a beam-assisted additive manufacturing device (1), comprising a cooling element (11) with a functional surface (12), wherein the cooling element (11) is surrounding or to be placed around a beam window (2) for admitting a beam (3) to a build space (4) of the device (1) during a manufacturing process, wherein the apparatus (10) is configured such that the functional surface (12) can be set to a temperature (T) at which vapor (V) emerging from the manufacturing process spontaneously condensates on the functional surface (12).

2. Apparatus (10) according to claim 1, wherein the cooling element (11) has a ring-like shape.

3. Apparatus (10) according to claims 1 or 2, wherein the functional surface (12) is formed by a conductive material, such as a metal.

4. Apparatus (10) according to one of the previous claims, wherein the functional surface (12) is formed of aluminum or copper.

5. Apparatus (10) according to one of the previous claims, wherein the functional surface (12) comprises corrugations or fins (13) in order to increase surface area.

6. Apparatus (10) according to one of the previous claims, wherein the functional surface (12) is or can be coupled to a water cooling system (8), such as a cooling system of the additive manufacturing device.

7. Apparatus (10) according to one of the previous claims, wherein the functional surface is or can be coupled to a cooling system (8) of beam optics of the additive manufacturing device (1).

8. Apparatus (10) according to one of the previous claims, wherein the temperature (T) is significantly below an operating temperature (T_{w}) of the beam window (2) during the manufacturing process.

9. Apparatus (10) according to one of the previous claims, wherein the vapor (V) is a metal and/or water vapor or any other vapor (V) carried by a shielding gas (G) stream during the manufacturing process.

10. Additive manufacturing device (1) comprising the apparatus (10) according to one of the previous claims, wherein the cooling element (11) is located at the top of a build space (4) and/or such that it surrounds the beam window (2).

11. Device (1) according to previous claim, being a selective laser melting device wherein the beam window (2) is a laser entry window.

12. Use of an apparatus (10) according to one of claims 1 to 9 for condensing (C) the vapor (V) during the manufacturing process in order to avoid settlement of smoke (s), soot or any residuals or particulates (P) on the beam window (2).
